# FASCICULE DE BREVET EUROPEEN

(11) **EP 2 992 292 B1**
(45) Date de publication et mention de la délivrance du brevet: **16.08.2017**
(21) Numéro de dépôt: 14729394.8
(22) Date de dépôt: 02.05.2014
(51) Int. Cl.: F41H 3/00, F41H 3/02

(54) **PROCEDE ET DISPOSITIF DE MASQUAGE ADAPTATIF**
ADAPTIVES MASKIERUNGSVERFAHREN UND VORRICHTUNG
ADAPTIVE CLOAKING METHOD AND DEVICE

(30) Priorité: 03.05.2013 FR 1301053
(43) Date de publication de la demande: 09.03.2016
(73) Titulaire: NEXTER Systems, 42328 Roanne (FR)
(72) Inventeur: MULLER, Sylvain, F-18023 Bourges (FR); PETITPAS, Eric, F-18023 Bourges (FR)
(74) Mandataire: Cabinet Chaillot
(86) Numéro de dépôt international: PCT/FR2014/051049
(87) Numéro de publication internationale: WO 2014/177818

(56) Documents cités:
- DE-A1-102005 044 404
- DE-A1-102008 033 464
- GB-A- 2 362 283
- US-A1- 2007 190 368
- BROWN N: "Hidden agenda: camouflage systems take a leaf out of science fiction", JANE'S INTERNATIONAL DEFENCE REVIEW, JANE'S INFORMATION GROUP, COULSDON, SURREY, GB, vol. 44, no. March, 1 mars 2011 (2011-03-01), pages 62-65, XP001560376, ISSN: 1476-2129

## Description

Le domaine technique de l'invention est celui des procédés et dispositifs de masquage adaptatifs d'éléments sur un terrain d'opération.

Au sens de la présente invention on entendra par élément : un objet, un véhicule ou bien une personne.

Il est déjà connu d'utiliser des dispositifs de masquage adaptatif qui associent une couverture de masquage émettrice et une caméra. Les brevets DE102008033464 et GB2369421 décrivent ainsi un écran souple formé de diodes électroluminescentes organiques (connues sous l'acronyme OLED). Cet écran est couplé à une caméra qui observe l'arrière-plan et commande les diodes de façon à faire apparaître sur l'écran une image de cet arrière-plan.

Un des inconvénients de ce dispositif connu est que l'image ainsi fournie n'assure un masquage que suivant une direction qui est sensiblement celle d'observation de la caméra.

Lorsque l'observateur regarde l'objet masqué suivant une direction différente, l'objet ne se confond plus avec son arrière-plan et il peut être détecté.

Il est aussi connu par le brevet WO200330099 de définir un moyen de masquage permettant de corriger ce problème lié aux directions d'observation. La solution proposée est cependant très complexe et met en oeuvre des capteurs de lumière multi-directions ainsi que des moyens émissifs suivant plusieurs directions et donnant des images différentes suivant les différentes directions d'observation.

L'invention a pour but de proposer un procédé de masquage ainsi que le dispositif associé qui mettent en oeuvre des moyens qui sont techniquement simples, procédé et dispositif assurant cependant un masquage amélioré par rapport à l'arrière-plan.

Ainsi l'invention a pour objet, un procédé de masquage adaptatif d'un élément suivant la révendication 1.

Selon un mode particulier de réalisation, pour minimiser le contraste et éventuellement l'écart de fréquences entre l'arrière-plan et la couverture on pourra déterminer au préalable le contour de la couverture, le synthétiseur d'images réalisant de façon continue une comparaison du contraste et éventuellement de la fréquence de part et d'autre du contour de façon à commander les images fournies par le ou les réseaux générateurs, en contraste et éventuellement fréquence, à l'intérieur du contour.

On pourra déterminer le contour, lors de la mise en place de la couverture, par une commande de l'ensemble des générateurs d'image à une valeur de référence.

Les images captées par la caméra et engendrées par le synthétiseur pourront être dans le domaine visible et/ou infra-rouge.

L'invention a également pour objet un dispositif de masquage adaptatif d'un éléments suivant la revendication 5. Avantageusement, la caméra pourra avoir un champ de vision réparti sur 360° autour d'un axe vertical.

Le dispositif pourra comprendre un réseau générateur d'images émissif dans le domaine visible et/ou infra-rouge.

Alternativement, le dispositif pourra comprendre un réseau générateur d'image réfléchissant dans le domaine visible et/ou infra-rouge.

L'invention sera mieux comprise à la lecture de la description qui va suivre d'un mode particulier de réalisation, description faite en référence aux dessins annexés et dans lesquels :
- La figure 1 montre de façon schématique en vue latérale un élément équipé d'un dispositif de masquage selon l'invention,
- La figure 2 est une vue de dessus de cet élément,
- La figure 3 est un logigramme schématisant les différentes étapes du procédé selon l'invention,
- Les figures 4a, 4b et 4c montrent en vue de dessus la mise en oeuvre du procédé selon l'invention avec le dispositif selon l'invention mis en place sur un élément.

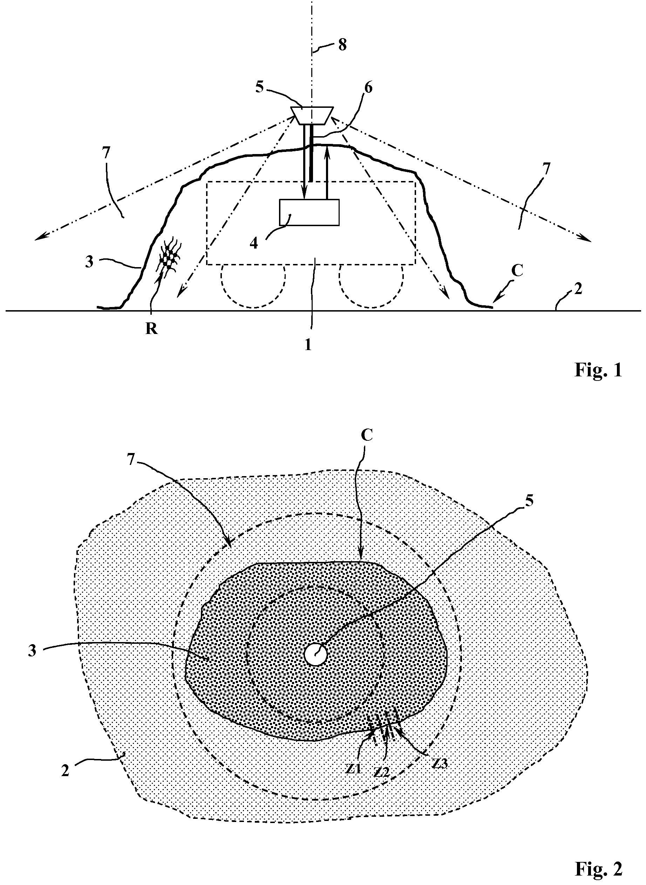

En se reportant aux figures 1 et 2, on a représenté un élément 1, qui est ici un véhicule à roues, positionné sur le sol 2 d'un terrain d'opérations.

Ce véhicule 1 est équipé d'un dispositif de masquage selon l'invention qui comprend au moins une couverture 3 souple ayant des dimensions suffisantes pour couvrir l'élément 1. La couverture 2 est réalisée sous la forme d'un tissu de matériau synthétique multi couches, par exemple une toile de Chlorure de polyvinyle (PVC) ou de polyéthylène, matériau comportant au moins un réseau R de générateurs d'images au niveau d'une de ses couches, réseau formé d'un ensemble de points (ou pixels) réfléchissants ou émissifs pour une fréquence de rayonnement donnée, fréquence visible (ou couleur) ou bien fréquence infrarouge. On pourra par exemple déposer sur une couche du matériau un réseau de diodes électroluminescentes organiques (OLED). Cette technologie OLED met en oeuvre des techniques d'impression et elle est particulièrement bien adaptée à la réalisation d'écrans émissifs souples. La demande de brevet US2012/0154196 décrit à titre d'exemple une telle architecture de couverture souple pour le camouflage actif. Il n'est donc pas nécessaire de la décrire plus en détails.

Un réseau OLED constitue un générateur d'image émissif dans le domaine des fréquences visibles.

Il est possible aussi de définir un réseau qui est réfléchissant dans le domaine des fréquences visibles ou encore réfléchissant ou émissif dans le domaine infrarouge.

On pourra par exemple, pour réaliser un réseau émissif dans le domaine infrarouge, remplacer les OLED par un réseau de générateurs thermiques telles que des éléments utilisant l'effet Peltier, c'est à dire pouvant être réchauffés ou refroidis lorsqu'ils sont parcourus par un courant d'une intensité donnée.

Les demandes de brevet US6927724, WO2012169954 et WO2010093323 décrivent à titre d'exemple un dispositif de masquage utilisant un réseau de générateurs thermiques.

A titre de variante il est également possible de définir un réseau générateur d'image qui est de type réfléchissant.

Un tel réseau ne génère pas de la lumière mais il réfléchit ou absorbe la lumière suivant certaines fréquences (visibles ou infra rouge). Les cristaux liquides utilisés pour réaliser de tels réseaux réfléchissants sont bien connus dans le domaine des afficheurs électrophorétiques et des encres électroniques. On pourra considérer la demande de brevet WO2004074911 qui décrit des exemples de matériaux.

Il est aussi possible de mettre en oeuvre les technologies de réseaux électrochromes qui sont émissif ou réfléchissants dans le domaine des fréquences infrarouges. La demande de brevet FR2969323 décrit un exemple de dispositif électrochrome multicouches commandable en émission ou réflexion.

La résolution du réseau réalisé dépendra de la finesse souhaitée pour le masquage. On pourra à titre d'exemple prévoir un réseau comprenant 2000 pixels au mètre carré.

Le réseau générateur de la couverture 3 est relié à un synthétiseur d'images 4 lui-même couplé à une caméra 5.

Bien entendu, la caméra 5 sera choisie en fonction du ou des types d'images engendrées par le réseau. Si la couverture ne comporte qu'un réseau fonctionnant dans le domaine visible, la caméra opèrera dans le domaine des fréquences visibles. Si la couverture comporte un réseau fonctionnant dans le domaine infrarouge, la caméra utilisée devra être capable d'observer dans le domaine infrarouge. Suivant le cas il sera nécessaire d'utiliser plusieurs caméras, certaines pour les fréquences visibles d'autres pour les fréquences infrarouges. Les caméras seront associées de telle sorte que le même champ d'observation soit couvert pour toutes les fréquences souhaitées.

Selon une caractéristique essentielle de l'invention, la caméra 5 est positionnée de façon à couvrir à la fois une partie d'un arrière-plan de l'élément (ici une partie du sol 2) et toute la couverture 3.

La caméra 5 est ici montée sur un mat 6 vertical solidaire de l'élément 1. Elle a un champ de vision 7 réparti sur 360° autour d'un axe vertical 8. Le champ de vision 7 est délimité sur les figures 1 et 2 par des lignes en pointillés.

Les caméras ayant un champ de vision couvrant 360° sont classiques. Elles comportent généralement plusieurs senseurs régulièrement répartis angulairement autour de l'axe 8. Une telle caméra a aujourd'hui une taille relativement réduite. Elle peut être positionnée au-dessus de la couverture 3 sans constituer pour autant un objet nuisant à la furtivité du camouflage réalisé. Pour améliorer le camouflage, le boîtier renfermant la caméra pourra porter lui aussi des générateurs d'image reliés au synthétiseur d'images 4.

Le synthétiseur 4 est un boîtier électronique qui comporte un calculateur pouvant analyser les images fournies par la caméra 5 et pouvant effectuer des mesures sur les images et en particulier pouvant définir, pour différentes zones géométriques du terrain observé, les valeurs de contrastes (écarts de luminosité ou d'intensité lumineuse visible ou écarts thermiques) et éventuellement les fréquences (visibles ou infrarouge). Ce calculateur comportera des algorithmes permettant de comparer différentes parties des images reçues et il comportera aussi les moyens permettant de commander les générateurs d'image de la couverture 3 (qu'il s'agisse de générateurs émissifs, réfléchissants ou thermiques).

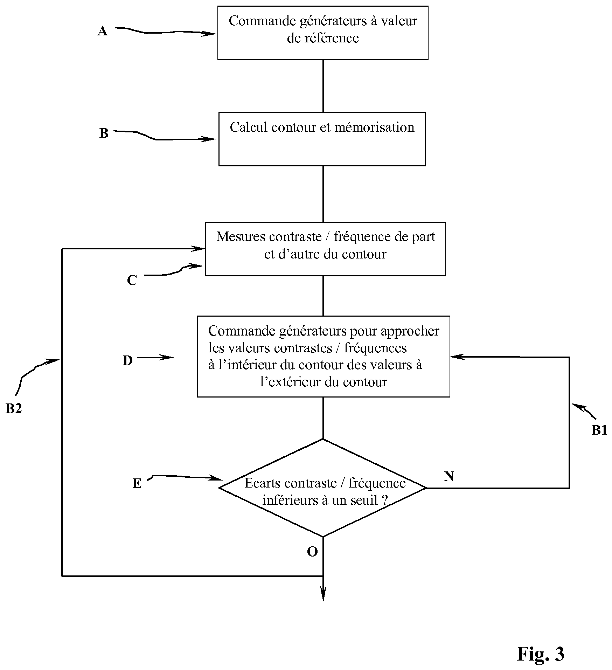

Le procédé selon l'invention va maintenant être décrit en référence à la figure 3.

Il est tout d'abord nécessaire pour le synthétiseur de déterminer le contour de la couverture souple 3 déposée sur l'élément 1.

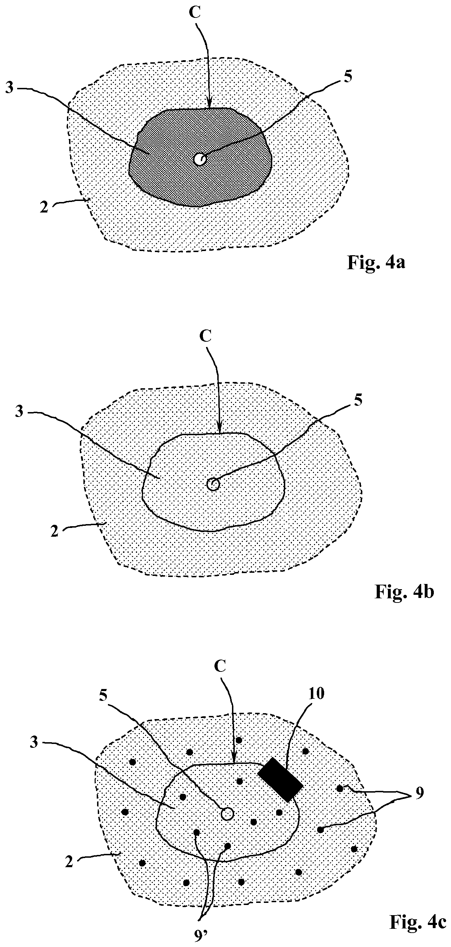

Pour cela, au cours d'une première étape A, le synthétiseur commandera les générateurs d'image à une valeur de fréquence monochrome de référence suffisamment contrastée par rapport à l'arrière-plan. Il pourra commander une émission blanche ou noire par exemple. Une telle émission contrastée a été schématisée à la figure 4a.

La caméra 5 qui observe à la fois l'arrière-plan (sol 2) et la couverture 3 repère ainsi nettement le contour C de la couverture 3. La géométrie de ce contour C est alors mise en mémoire dans le calculateur du synthétiseur 4 (étape B). Ceci permettra ultérieurement au synthétiseur 4 de déterminer sur les images qui seront prises en continu par la caméra 5 les caractéristiques de fréquence et de contraste (thermique ou visible) de l'arrière-plan 2 et celles de la couverture 3.

En régime permanent, la caméra 5 fournit au synthétiseur 4 les images du champ 7 qui est visualisé (figure 2). Le calculateur du synthétiseur va alors (étape C) mesurer les paramètres de contraste et éventuellement de fréquences de part et d'autre du contour C mémorisé.

Pour le domaine visible, le calculateur mesurera les écarts de couleurs (ou de fréquences) et aussi les écarts de luminosité (contraste entre les couleurs de part et d'autre du contour).

Pour le domaine infrarouge, une simple mesure d'écart de luminosité (contraste thermique) est généralement suffisante pour permettre le pilotage des générateurs thermiques à effet Peltier.

Cette mesure se fait avec une certaine résolution tout le long du contour C et de part et d'autre du contour C sur l'ensemble du champ 7. On a représenté ainsi schématiquement sur la figure 2 trois intervalles de mesure Z1, Z2 et Z3 le long du contour C. L'arrière-plan 2 n'est en effet pas forcément identique tout le long du contour C. Il est donc nécessaire de définir avec une certaine précision les caractéristiques de contrastes et éventuellement de fréquences nécessaires pour la couverture 3 tout le long du contour C. Le dispositif selon l'invention peut ainsi assurer un masquage qui suit les caractéristiques du terrain. La couverture peut même adopter au niveau d'une partie du contour les contrastes et éventuellement les fréquences associés à un arrière-plan vertical, comme un mur ou un bâtiment.

La résolution de mesure sera liée à celle autorisée par la caméra 5 et aux dimensions de l'élément 1 (et de la résolution du réseau R porté par la couverture 3).

Le synthétiseur 4 commande ensuite (étape D) les générateurs d'image de la couverture 3 pour que les contrastes (visibles ou thermiques) et éventuellement les fréquences (visibles) au niveau de chaque zone de mesure Z1, Z2... Zi soient, au niveau de la couverture (donc à l'intérieur du contour C), proches de ce qui est mesuré à l'extérieur du contour C. Il en résulte le masquage schématisé figure 4b.

Le synthétiseur 4 travaille donc en différentiel et le réglage est contrôlé par un test E de mesure des écarts de contraste et éventuellement de fréquences de part et d'autre du contour C pour chaque zone de mesure Zi. On approche ainsi très vite les valeurs souhaitées pour fréquences et contrastes sans qu'il soit nécessaire d'étalonner au préalable les générateurs d'image.

La boucle B1 d'asservissement conduit la commande jusqu'à minimisation des écarts (sortie N du test E).

Une fois les écarts minimisés (sortie O du test E), la boucle B2 conduit à une nouvelle mesure de contraste et éventuellement de fréquence de part et d'autre du contour. Les mesures pourront être conduites avec une fréquence d'échantillonnage de 1 mesure par minute à 1 mesure par seconde suivant les besoins d'adaptation dynamique. Le camouflage est ainsi pleinement adaptatif et l'aspect de la couverture 3 suit au cours du temps les variations de luminosité de l'arrière-plan 2.

Le camouflage peut ainsi être pleinement opérationnel à toute heure de la journée en suivant en particulier les variations de luminosité et d'ombres dues au déplacement du soleil.

On a décrit la commande des contrastes et éventuellement des fréquences de la couverture au voisinage du contour C. Pour ce qui concerne les contrastes et éventuellement fréquences adoptés pour toute la surface interne au coutour C de la couverture 3, en s'éloignant du contour, le synthétiseur 4 commandera les générateurs d'image de la couverture de façon à donner à celle-ci un aspect en contrastes et éventuellement en fréquences ayant des valeurs moyennes compte tenu de ce qui est mesuré pour l'ensemble de l'arrière-plan 2.

L'algorithme sera par exemple défini pour minimiser les écarts de contraste et éventuellement de fréquence lorsqu'on est très proche du contour C, cela afin d'estomper les différences au niveau des bords de la couverture. L'algorithme sera par ailleurs défini pour prendre en compte au niveau du reste de la couverture 3, et à distance du contour C, des contrastes et éventuellement fréquences moyens calculés à partir des valeurs mesurées sur l'arrière-plan 2 à des distances du contour C plus importantes.

On a représenté à la figure 4c un exemple de mise en oeuvre dans lequel la couverture 3 couvre partiellement une zone 10 plus contrastée (buisson ou élément de mur). La caméra détecte lors de son analyse cette zone contrastée et les générateurs d'image de la couverture 3 sont commandés par le synthétiseur de telle sorte qu'ils fournissent une image estompant le contour C et correspondant donc à celle de la zone 10. Le synthétiseur 4 sera programmé pour que l'image de la zone 10 sur la couverture 3 s'étende sur une longueur moyenne du même ordre que la longueur de cette zone visualisée en dehors du contour C.

On remarque aussi sur la figure 4c, que l'arrière-plan 2 comporte des points 9 plus contrastés. L'algorithme du synthétiseur calcule la densité moyenne de ces points 9 au niveau de l'arrière-plan 2 et il commande les générateurs de la couverture 3 pour que des points 9' de même fréquence (ou couleur) soient synthétisés avec une densité équivalente.

Différentes variantes sont possibles sans sortir du cadre de l'invention. Il est ainsi possible de définir une couverture comportant des zones dépourvues de générateurs d'image, par exemple au niveau d'épiscopes d'observation.

Il est possible de réaliser des masquages souples de véhicules mais aussi des masquages individuels pour fantassin.

Il est possible enfin de définir une couverture comportant plusieurs réseaux de générateurs d'image : par exemple un réseau actif dans le domaine visible et un réseau actif dans le domaine infrarouge.

## Revendications

1. Procédé de masquage adaptatif d'un élément (1) sur un terrain d'opérations (2), procédé dans lequel on met en oeuvre au moins une couverture (3) permettant de couvrir l'élément (1), couverture portant au moins un réseau (R) générateur d'images, réseau relié à un synthétiseur d'images (4) lui-même couplé à une caméra (5), procédé **caractérisé en ce que** la caméra (5) est positionnée de façon à couvrir à la fois une partie d'un arrière-plan (2) de l'élément (1) et toute la couverture (3), le synthétiseur d'images (4) au préalable déterminant le contour de la couverture souple (3) déposée sur l'élément (1) et déterminant sur les images qui seront prises en continu par la caméra (5) les caractéristiques de fréquence et de contraste de l'arrière-plan (2) et celles de la couverture (3), le synthétiseur d'images (4) commandant le ou les réseaux (R) générateurs d'images de façon à minimiser le contraste et éventuellement l'écart de fréquences entre l'arrière-plan (2) et la couverture (3).

2. Procédé de masquage adaptatif selon la revendication 1, **caractérisé en ce que** pour minimiser le contraste et éventuellement l'écart de fréquences entre l'arrière-plan (2) et la couverture (3) le synthétiseur d'images (4) réalisant de façon continue une comparaison du contraste et éventuellement de la fréquence de part et d'autre du contour (C) de façon à commander les images fournies par le ou les réseaux générateurs, en contraste et éventuellement fréquence, à l'intérieur du contour.

3. Procédé de masquage adaptatif selon la revendication 2, **caractérisé en ce qu'**on détermine le contour (C) lors de la mise en place de la couverture (3) par une commande de l'ensemble des générateurs d'image à une valeur de référence.

4. Procédé de masquage adaptatif selon une des revendications 1 à 3, **caractérisé en ce que** les images captées par la caméra (5) et engendrées par le synthétiseur (4) sont dans le domaine visible et/ou infra-rouge.

5. Dispositif de masquage adaptatif d'un élément sur un terrain d'opérations, dispositif comportant au moins une couverture (3) permettant de couvrir l'élément (1), couverture portant au moins un réseau générateur d'images, réseau relié à un synthétiseur d'images (4) lui-même couplé à une caméra (5), dispositif ***caractérisé en ce que*** la caméra (5) est positionnée de façon à couvrir à la fois une partie d'un arrière-plan (2) de l'élément (1) et toute la couverture (3), le synthétiseur d'images (4) configuré pour au préalable déterminer le contour de la couverture souple (3) déposée sur l'élément (1) et pour déterminer sur les images qui seront prises en continu par la caméra (5) les caractéristiques de fréquence et de contraste de l'arrière-plan (2) et celles de la couverture (3), le synthétiseur d'images (4) configuré pour commander le ou les réseaux générateurs d'images de façon à minimiser le contraste et éventuellement l'écart de fréquences entre l'arrière-plan (2) et la couverture (3) .

6. Dispositif de masquage adaptatif selon la revendication 5, **caractérisé en ce que** la caméra (5) a un champ de vision réparti sur 360° autour d'un axe vertical (8).

7. Dispositif de masquage adaptatif selon une des revendications 5 ou 6, **caractérisé en ce qu'**il comprend un réseau générateur d'images émissif dans le domaine visible et/ou infra-rouge.

8. Dispositif de masquage adaptatif selon une des revendications 5 à 7, **caractérisé en ce qu'**il comprend un réseau générateur d'image réfléchissant dans le domaine visible et/ou infra-rouge.

## Patentansprüche

1. - Adaptatives Maskierungsverfahren für ein Element (1) in einem Einsatzgebiet (2), wobei man bei dem Verfahren mindestens eine Decke (3) benutzt, die es ermöglicht, das Element (1) zu bedecken, und die mindestens ein bilderzeugendes Netz (R) trägt, das mit einem Bildsynthetisiermittel (4) verbunden ist, das seinerseits an eine Kamera (5) gekoppelt ist, wobei das Verfahren **dadurch gekennzeichnet ist, dass** die Kamera (5) so positioniert ist, dass sie gleichzeitig einen Teil eines Hintergrunds (2) des Elements (1) und die gesamte Decke (3) abdeckt, wobei das Bildsynthetisiermittel (4) den Umriss der weichen Decke (3), die auf dem Element (1) abgelegt ist, im voraus bestimmt, und auf den Bildern, die kontinuierlich von der Kamera (5) aufgenommen werden, die Merkmale Frequenz und Kontrast des Hintergrunds (2) und diejenigen der Decke (3) bestimmt, wobei das Bildsynthetisiermittel (4) das oder die bilderzeugenden Netze (R) steuert, um den Kontrast zu minimalisieren und eventuell den Abstand von Frequenzen zwischen dem Hintergrund (2) und der Decke (3).

2. - Adaptatives Maskierungsverfahren nach Anspruch 1, **gekennzeichnet dadurch, dass**, um den Kontrast und eventuell den Abstand von Frequenzen zwischen dem Hintergrund (2) und der Decke (3) zu minimalisieren, das Bildsynthetisiermittel (4) kontinuierlich einen Vergleich des Kontrasts und eventuell der Frequenz an beiden Seiten des Umrisses (C) verwirklicht, um die von dem oder den bilderzeugenden Netzen gelieferten Bilder zu steuern, in Kontrast und eventuell Frequenz, im Innern des Umrisses.

3. - Adaptatives Maskierungsverfahren nach Anspruch 2, **dadurch gekennzeichnet, dass** man den Umriss (C) während der Platzierung der Decke (3) durch eine Steuerung aller Bildgeneratoren auf einen Bezugswert bestimmt.

4. - Adaptatives Maskierungsverfahren nach einem der Ansprüche 1 bis 3, **gekennzeichnet dadurch, dass** die von der Kamera (5) aufgenommenen und von dem Synthesizer (4) erzeugten Bilder im sichtbaren und/oder Infrarot-Bereich liegen.

5. - Adaptative Maskierungsvorrichtung für ein Element in einem Einsatzgebiet, wobei die Vorrichtung mindestens eine Decke (3) umfasst, die es ermöglicht, das Element (1) zu bedecken, und die mindestens ein bilderzeugendes Netz trägt, das mit einem Bildsynthetisiermittel (4) verbunden ist, das seinerseits an eine Kamera (5) gekoppelt ist, wobei die Vorrichtung **dadurch gekennzeichnet ist, dass** die Kamera (5) so positioniert ist, dass sie gleichzeitig einen Teil eines Hintergrunds (2) des Elements (1) und die gesamte Decke (3) abdeckt, wobei das Bildsynthetisiermittel (4) konfiguriert ist, um den Umriss der weichen Decke (3), die auf dem Element (1) abgelegt ist, im voraus zu bestimmen, und auf den Bildern, die kontinuierlich von der Kamera (5) aufgenommen werden, die Merkmale Frequenz und Kontrast des Hintergrunds (2) und diejenigen der Decke (3) zu bestimmen, wobei das Bildsynthetisiermittel (4) konfiguriert ist, um das oder die bilderzeugenden Netze zu steuern, um den Kontrast zu minimalisieren und eventuell den Abstand von Frequenzen zwischen dem Hintergrund (2) und der Decke (3).

6. - Adaptative Maskierungsvorrichtung nach Anspruch 5, **gekennzeichnet dadurch, dass** die Kamera (5) ein 360°-Sichtfeld um eine senkrechte Achse (8) herum hat.

7. - Adaptative Maskierungsvorrichtung nach einem der Ansprüche 5 oder 6, **gekennzeichnet dadurch, dass** sie ein im sichtbaren und/oder Infrarot-Bereich emittierendes bilderzeugendes Netz umfasst.

8. - Adaptative Maskierungsvorrichtung nach einem der Ansprüche 5 bis 7, **gekennzeichnet dadurch, dass** sie ein im sichtbaren und/oder Infrarot-Bereich reflektierendes bilderzeugendes Netz umfasst.

## Claims

1. - An adaptive masking method for an element (1) in a field of operations (2), method in which at least one cover (3) allowing to cover the element (1) is implemented, the cover carrying at least one image generator network (R), the network being connected to an image synthesizer (4) coupled to a camera (5), method **characterised in that** the camera (5) is positioned so as to cover both a portion of a background (2) of the element (1) and the entire cover (3), the image synthesizer (4) determining beforehand the outline (C) of the flexible cover (3) placed on the element (1) and determining on the images that will be taken continuously by the camera (5) the frequency and contrast characteristics of the background (2) and those of the cover (3), the image synthesizer (4) controlling the image generator network or networks (R) so as to minimize the contrast and optionally the frequency deviation between the background (2) and the cover (3).

2. - The adaptive masking method according to claim 1, **characterised in that**, in order to minimize the contrast and optionally the frequency deviation between the background (2) and the cover (3), the image synthesizer (4) continuously compares the contrast and optionally the frequency on either side of the outline (C) so as to control the images provided by the generator network or networks, in contrast and optionally in frequency, within the outline.

3. - The adaptive masking method according to claim 2, **characterised in that** the outline (C) is determined when placing the cover (3), by setting all the image generators to a reference value.

4. - The adaptive masking method according to one of claims 1 to 3, **characterised in that** the images captured by the camera (5) and generated by the synthesizer (4) are within the visible and/or infrared spectrum.

5. - An adaptive masking device for an element in a field of operations, the device comprising at least one cover (3) allowing to cover the element (1), the cover carrying at least one image generator network, the network being connected to an image synthesizer (4) coupled to a camera (5), the device being **characterised in that** the camera (5) is positioned so as to cover both a portion of a background (2) of the element (1) and the entire cover (3), wherein the image synthesizer (4) is configured to determine beforehand the outline (C) of the flexible cover (3) placed on the element (1) and to determine on the images that will be taken continuously by the camera (5) the frequency and contrast characteristics of the background (2) and those of the cover (3), wherein the image synthesizer (4) is configured to control the image generator network or networks so as to minimize the contrast and optionally the frequency deviation between the background (2) and the cover (3).

6. - The adaptive masking device according to claim 5, **characterised in that** the camera (5) has a field of view extending over 360° around a vertical axis (8).

7. - The adaptive masking device according to one of claims 5 or 6, **characterised in that** it comprises an image generator network that is emissive within the visible and/or infrared spectrum.

8. - The adaptive masking device according to one of claims 5 to 7, **characterised in that** it comprises an image generator network that is reflective within the visible and/or infrared spectrum.
